## Europäisches Patentamt
## European Patent Office
## Office européen des brevets

(11) Veröffentlichungsnummer: **0 126 926**
**B1**

(12) **EUROPÄISCHE PATENTSCHRIFT**

(45) Veröffentlichungstag der Patentschrift:
27.08.86

(51) Int. Cl.⁴: **C 01 B 25/12, C 01 B 25/20**

(21) Anmeldenummer: 84104041.3

(22) Anmeldetag: 11.04.84

(54) Verfahren und Vorrichtung zur Herstellung von Phosphorpentoxid unter Ausnutzung der Reaktionswärme.

(30) Priorität: 29.04.83 DE 3315630

(43) Veröffentlichungstag der Anmeldung:
05.12.84 Patentblatt 84/49

(45) Bekanntmachung des Hinweises auf die Patenterteilung:
27.08.86 Patentblatt 86/35

(84) Benannte Vertragsstaaten:
AT CH DE FR GB IT LI NL

(56) Entgegenhaltungen:
EP - A - 0 046 865
FR - A - 1 199 420
US - A - 2 532 322
US - A - 3 810 740

Patent Abstracts of Japan vol. 3, no. 138, 16 November 1979 Seite 101 C 64

(73) Patentinhaber: HOECHST AKTIENGESELLSCHAFT,
Postfach 80 03 20, D-6230 Frankfurt am Main 80 (DE)

(72) Erfinder: Kuxdorf, Bernhard,
von-Westerburg-Strasse 12, D-5040 Brühl (DE)
Erfinder: Luhr, Peter, Wachendorfer Weg 1, D-5358 Bad Münstereifel (DE)
Erfinder: Werner, Hugo, Brunhildstrasse 11,
D-5030 Hürth (DE)
Erfinder: Thümmler, Ursus, Dr., Am Kapellenbusch 27,
D-5042 Erftstadt (DE)
Erfinder: Dorn, Friedrich-Wilhelm, Dr., Giselherweg 3,
D-5030 Hürth (DE)

ACTORUM AG

Beschreibung

Aus der Europäischen Patentanmeldung EP-A-0046865 ist bereits ein Verfahren zur Herstellung von Phosphorpentoxid durch Verbrennen von elementarem Phosphor mit Hilfe von Luft unter Ausnutzung der Reaktionswärme zur Energiegewinnung bekannt, welches dadurch gekennzeichnet ist, dass man die Phosphorverbrennung mit getrockneter Luft mit einem Wassergehalt von 5 bis 0,01 g/m³ Luft in einer Brennkammer durchführt, deren metallische Wände zu einem Hohlräume aufweisenden Kühlsystem ausgebildet sind, wobei in dem Kühlsystem eine als Wärmeträger für die Reaktionswärme geeignete Flüssigkeit bzw. ein Flüssigkeits-Dampfgemisch unter Erwärmung auf Temperaturen von über 150 bis 500° C bei Drükken von 1 bis 150 bar im Kreislauf geführt wird; dass man den im Kühlsystem entstandenen Dampf aus letzterem kontinuierlich abzieht und durch eine äquivalente Menge frischer Flüssigkeit ersetzt, und dass man die aus der Brennkammer entweichenden heissen $P_2O_5$-Dämpfe kondensiert oder zu Folgeprodukten weiterverarbeitet. Die im Kreislauf geführte Flüssigkeit ist bevorzugt Wasser. Die Wände bzw. das Kühlsystem der Brennkammer können aus nichtrostendem Stahl bestehen. Bevorzugt bestehen die Wände der Brennkammer bzw. das Kühlsystem aus einer metallischen Rohrwand mit direkt verschweissten Rohren, einer Flossenrohrwand oder einer Membranrohrwand. Die einzelnen Rohre können vertikal oder horizontal angeordnet sein. Die Phosphorpentoxiddämpfe verlassen die Brennkammer mit einer Temperatur von 300 bis 1 000° C und können zu Phosphorsäure weiterverarbeitet werden. Weiterhin ist aus der Europäischen Patentanmeldung EP-A-0037735 ein Verfahren zur Wärmerückgewinnung bei der Verbrennung elementaren Phosphors in Gegenwart von Wasser sowie die Herstellung von Ultraphosphorsäure bekannt. Hierbei streicht der $P_2O_5$ enthaltende Produktstrom an einer metallischen Kühlschlange vorbei, durch die eine Wärmeübertragungsflüssigkeit fliesst, welche die Oberfläche der Kühlschlange auf 100° C bis 900° C hält.

Sofern gemäss der Europäischen Patentanmeldung EP-A-0046865 die Verbrennungsluft getrocknet eingesetzt wird, kann die Apparatur aus gewöhnlichem Stahl gebaut sein, da dann Korrosion nicht auftritt, doch hat die Verwendung von Edelstählen den Vorteil, dass bei einem Temperaturniveau unter 80° C auch feuchte Luft zugelassen werden kann, was vor allem bei der Inbetriebnahme (Aufheizen) oder beim Abstellen der Anlage und bei einem möglichen Wassereinbruch von Bedeutung ist.

Die beschriebenen Verfahren funktionieren zwar im Prinzip, doch bereitet ihre Übertragung in den technischen und grosstechnischen Bereich erhebliche Schwierigkeiten. So hat es sich gezeigt, dass z.B. bei Unterschreitung einer Mindesttemperatur des $P_2O_5$-haltigen Produktgases von 358° C auf der Kühlwand ein zäher Belag auftritt, der die weitere Wärmeübertragung erheblich behindert. Dieser Belag wird an Umlenkungen und in Totecken besonders dick und löst sich von Zeit zu Zeit in Brocken ab, welche an der Ablösestelle eine ungleichmässige Wärmebelastung herbeiführen und dadurch hohe innere Temperaturspannungen in den einzelnen Rohrwänden verursachen, was wiederum Gefügeveränderungen und schliesslich Risse zur Folge hat. Die abgelösten Brocken führen andererseits an den Auffallstellen zu einer weiteren Behinderung des Wärmedurchgangs. Schliesslich kann sich der Durchtrittsquerschnitt so sehr verengen, dass in der Brennkammer ein unzulässiger Überdruck entsteht, was sofortige Betriebseinstellung und sorgfältige Säuberung erfordert.

Die Ausführung eines Apparates mit rechteckigem Strömungsquerschnitt hat den Nachteil, dass sich in den Ecken ein starker Belag bildet, der von einer gewissen Stärke an unregelmässig abspringt und den oben beschriebenen Effekt herbeiführt.

Bei Verwendung von Edelstahl für den Bau der Brennkammer wird allerdings infolge der geringeren Wärmeleitfähigkeit dieses Werkstoffes im Vergleich zu Stahl die zulässige innere Temperaturspannung bereits bei viel geringerer Beanspruchung erreicht.

Es hat sich nun überraschenderweise herausgestellt, dass die geschilderten Schwierigkeiten nicht auftreten, wenn die Brennkammer als zylindrischer Körper ausgeführt ist und in der kreisförmigen Bodenplatte ein oder mehrere Brenner axialsymmetrisch angeordnet sind. Die Temperatur an der Oberfläche jedes einzelnen Kühlrohres der Wandung sollte immer oberhalb der Sublimationstemperatur (358° C) von $P_2O_5$ liegen oder diese nur geringfügig unterschreiten. In diesem Falle bleiben die wärmeübertragenden Flächen belagfrei oder werden nur von einem geringfügigen, gleichmässigen Belag überzogen. Auf diese Weise erzielt man sehr hohe Heizflächenbelastungen. Durch das Nichtvorhandensein eines Belags bzw. dadurch, dass dieser Belag nur geringfügig und vor allem gleichmässig ist, wird erreicht, dass die entstehenden Temperaturspannungen auch gleichmässig über den Umfang der Brennkammer verteilt sind. Die kreisförmige Anordnung der Kühlrohre als Wandung bewirkt ausserdem, dass die Brennkammer bei Unterdruck oder bei höheren Drücken betrieben werden kann.

Im einzelnen betrifft die Erfindung nunmehr ein Verfahren zur Herstellung von Phosphorpentoxid durch Verbrennen von elementarem Phosphor mit getrockneter Luft in einer Brennkammer aus Stahl unter Ausnutzung der Reaktionswärme zur Energiegewinnung, wobei die Wandung der Brennkammer zu einem Hohlräume aufweisenden Kühlsystem ausgebildet ist und in dem Kühlsystem eine als Wärmeträger zur Abführung der Reaktionswärme geeignete Flüssigkeit bzw. ein Flüssigkeits-Dampfgemisch unter Erwärmung auf erhöhte Temperaturen bei vorzugsweise erhöhtem Druck im Kreislauf geführt wird, und wobei man den im Kühlsystem entstandenen Dampf kontinuierlich abzieht, durch eine äquivalente Menge frischer Flüssigkeit ersetzt und die aus der Brennkammer

entweichenden heissen $P_2O_5$-Dämpfe kondensiert oder zu Folgeprodukten weiterverarbeitet, welches dadurch gekennzeichnet ist, dass die Brennkammer ein zylindrischer Behälter mit einem Längenverhältnis von Höhe zu Durchmesser von 2,5:1 bis 5:1 ist, wobei in der kreisförmigen Bodenplatte 1 bis 10 Brenner axialsymmetrisch angeordnet sind.

Darüber hinaus kann das Verfahren der Erfindung wahlweise und bevorzugt dadurch gekennzeichnet sein, dass

a) in der Bodenplatte ein Brenner zentrisch angeordnet ist;

b) in der Bodenplatte 2 bis 10 Brenner auf konzentrischen Kreisen äquidistant angeordnet sind;

c) man einen stöchiometrischen Luftüberschuss von 1 bis 40% einsetzt;

d) man die Verbrennung bei Drücken von 0,8 bis 10 bar durchführt;

e) der oder die Brenner mit je einer Einstoffdüse ausgerüstet sind, durch welche flüssiger Phosphor mit einem Druck von 5 bis 50 bar in die Brennkammer eintritt;

f) der oder die Brenner mit je einer Zweistoffdüse für flüssigen Phosphor und Zerstäubungsluft ausgerüstet sind, wobei die Zerstäubungsluft mit einem Druck von 2 bis 6 bar in die Brennkammer eintritt;

g) die Brennkammer mit einer Heizflächenbelastung von 50 bis 150 kW/m² betrieben wird;

h) die Brennkammer mit einer Heizvolumenbelastung von 300 bis 600 kW/m³ betrieben wird;

i) in dem Kühlsystem eine als Wärmeträger zur Abführung der Reaktionswärme geeignete Flüssigkeit bzw. ein Flüssigkeits-Dampfgemisch unter Erwärmung auf 100 bis 600° C bei Drücken von 1 bis 300 bar im Kreislauf geführt wird;

j) die als Wärmeträger und zur Dampferzeugung geeignete Flüssigkeit Wasser mit einem Sauerstoffgehalt von 0,01 bis 0,1 mg/l und einem Chloridgehalt von 0,01 bis 0,5 mg/l ist.

Die Erfindung betrifft weiterhin eine Vorrichtung zur Durchführung des beschriebenen Verfahrens, bestehend aus einer Brennkammer aus Stahl, deren Wandung zu einem Hohlräume aufweisenden Kühlsystem ausgebildet ist, Zuleitungen für flüssigen Phosphor und Luft, einer Ableitung für Phosphorpentoxid am oberen Ende der Brennkammer, als Kühlkreislauf ausgestalteten Zu- und Ableitungen am Kühlsystem sowie einem in den Kühlkreislauf eingeschalteten Dampfabscheider mit einer Zuleitung für frische Kühlflüssigkeit und einer Ableitung für gewonnenen Dampf, welches dadurch gekennzeichnet ist, dass die Brennkammer ein zylindrischer Behälter mit einem Längenverhältnis von Höhe zu Durchmesser von 2,5:1 bis 5:1 ist, in dessen kreisförmiger Bodenplatte 1 bis 10 Brenner axialsymmetrisch angeordnet sind.

Darüber hinaus kann die erfindungsgemässe Vorrichtung wahlweise und bevorzugt dadurch gekennzeichnet sein, dass

a) ein Brenner zentrisch in die Bodenplatte eingelassen ist;

b) 2 bis 10 Brenner auf konzentrischen Kreisen äquidistant in die Bodenplatte eingelassen sind;

c) die zu einem Kühlsystem ausgebildete Wandung der Brennkammer aus einer Rohrwand mit parallel aneinandergeschweissten Rohren, einer Flossenrohrwand oder einer Membranrohrwand besteht;

d) die Wandung der Brennkammer aus senkrecht aneinandergeschweissten Rohren besteht;

e) die Brennkammer aus nichtrostendem Stahl besteht.

Durch den Betrieb der Brennkammer unter Druck ist es möglich, die Ausbeute der Verbrennung von Phosphor zu hochreinem $P_2O_5$ bzw. $P_4O_{10}$ zu verbessern und das Verfahren ohne zusätzliches Gebläse für den $P_2O_5$-haltigen Produktstrom zu betreiben. Nach dem Verlassen der Brennkammer kann der Produktstrom, falls erwünscht, in an sich bekannter Weise zu Phosphorsäure verarbeitet werden.

In den „Technischen Richtlinien Dampfkessel", aufgestellt vom Deutschen Dampfkessel-Ausschuss und herausgegeben von der Vereinigung der Technischen Überwachungsvereine im Beuth-Verlag, wird die einzuhaltende Qualität des eingesetzten Kühlwassers festgelegt. Zwecks Verlängerung der Lebensdauer des verarbeiteten Stahls oder Edelstahles bei den hohen Flächenbelastungen und Wandtemperaturen ist erfindungsgemäss zusätzlich ein besonders niedriger Sauerstoff- und Chloridgehalt des Kühlwassers von Bedeutung.

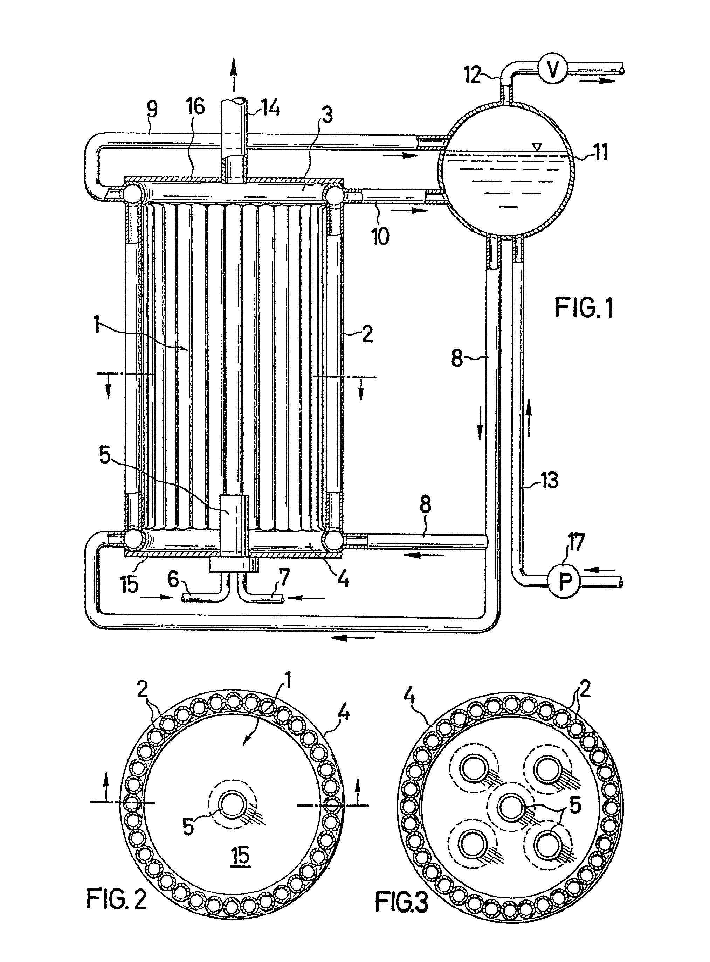

Die Wirkungsweise des erfindungsgemässen Verfahrens und die Vorrichtung zu seiner Durchführung sind im folgenden anhand von beispielhaften Schemazeichnungen näher erläutert. Figur 1 zeigt die Vorrichtung der Erfindung im Längsschnitt. Die zylindrische Brennkammer 1 wird von der aus parallel aneinandergeschweissten vertikalen Rohrabschnitten gebildeten Wandung 2 umschlossen, wobei diese oben und unten offenen Rohrabschnitte in je einem ringförmigen Sammelrohr 3 bzw. 4 zusammengefasst sind. Die Brennkammer 1 ist an ihrem unteren Ende mit einer Bodenplatte 15 und an ihrem oberen Ende mit einer Deckelplatte 16 gasdicht verschlossen. Die Brennkammer 1 enthält im Mittelpunkt ihrer Bodenplatte 15 den beispielsweise mit einer Zweistoffdüse ausgerüsteten Brenner 5, der durch eine erste Zuleitung 6 mit flüssigem, elementaren Phosphor und durch eine zweite Zuleitung 7 mit getrockneter Luft beaufschlagt wird. In das untere Sammelrohr 4 tritt an zwei verschiedenen Stellen Wasser aus einer Leitung 8 ein, fliesst durch die Rohrabschnitte 2 in das obere Sammelrohr 3 und verlässt dieses, teilweise als Dampf, an zwei verschiedenen Stellen über die Ableitungen (9, 10), welche in einem Dampfabscheider 11 münden. Der unter Druck stehende heisse Dampf wird über Leitung 12 seiner weiteren Verwendung zugeführt, während das Wasser über Leitung 8 erneut dem unteren Sammelrohr 4 zuströmt. Über eine eine Speisepumpe 17 aufweisende Leitung 13 wird dem Dampfabscheider 11 entsprechend der über die Leitung 12 abgezogenen Dampfmenge Frischwasser zugeführt. Über ein Rohr 14 verlässt das $P_2O_5$-haltige Produktgas die Brennkammer 1 zur weiteren Aufarbeitung.

Figur 2 zeigt die Brennkammer 1 im Querschnitt. Man erkennt den in der Bodenplatte zentrisch angeordneten Brenner 5 und die aus parallel aneinandergeschweissten vertikalen Rohrabschnitten bestehende Wandung 2.

Figur 3 zeigt den Querschnitt wie Figur 2, jedoch mit vier weiteren Brennern 5, welche in der Bodenplatte der Brennkammer 1 konzentrisch zum mittigen Brenner äquidistant angeordnet sind. Somit sind in der kreisförmigen Bodenplatte insgesamt fünf Brenner 5 axialsymmetrisch angeordnet.

*Beispiel*

In der zylindrischen Brennkammer 1 mit Rohrwänden 2 aus nichtrostendem Stahl und einem Längenverhältnis von Höhe zu Durchmesser von 4 zu 1 wurden je Stunde 210 kg elementarer, flüssiger, gelber Phosphor mit einer Temperatur von 75° C in Gegenwart von trockener Luft bei einem Druck von 5 bar verbrannt.

In der Bodenplatte der Brennkammer 1 war ein einzelner Brenner 5 zentrisch angeordnet. Er war mit einer Zweistoffdüse für Phosphor (Leitung 6) und Druckluft (Leitung 7) ausgerüstet. Der stöchiometrische Luftüberschuss betrug 20%. In der Brennkammer 1 herrschte ein Druck von 1,5 bar. Die bei der Verbrennung freiwerdende Reaktionswärme von 4 GJ/h wurde zu 65% durch die Rohrwände auf die Wärmeträgerflüssigkeit in Form von vollentsalztem und entgastem Wasser (Chloridgehalt: 0,05 mg/l; Sauerstoffgehalt: 0,04 mg/l) übertragen. Hierbei trat eine teilweise Verdampfung des Wassers ein. Die Heizflächenbelastung der Brennkammer betrug (von unten nach oben abfallend) 120 bis 60 kW/m² bei einer mittleren Heizvolumenbelastung von 400 kW/m³.

Das Wasser-/Dampfgemisch stieg durch die einzelnen Rohre 2 in das Sammelrohr 3 und dann in den Dampfabscheider 11, in welchem eine Trennung von Dampf und Flüssigkeit erfolgte. Der Dampfdruck im Abscheider wurde durch ein Druckventil in der Leitung 12 auf 80 bar gehalten und der erzeugte Sattdampf in einer Menge von 1,4 t pro Stunde über die Leitung 12 abgezogen. Die flüssige Phase im Abscheider 11 (295° C) wurde über die Rücklaufleitung 8 und das untere Sammelrohr 4 den Steigrohren der Rohrwand 2 zugeführt. Damit war der Kreis des Flüssigkeitsumlaufs, bewirkt durch die Dichteunterschiede in dem Umlaufsystem, geschlossen.

Durch eine am Abscheider 11 angebrachte Niveauregelung war gewährleistet, dass das Kühlsystem stets mit ausreichend Wasser versorgt war, wobei Frischwasserzusätze über die Leitung 13 erfolgten. Der Brenner 5 war in der Brennkammer 1 nach oben gerichtet, wodurch der Abschnitt der Kammer in der Nähe des Brenners von Strahlungswärme beaufschlagt wurde. Die $P_2O_5$-haltigen Abgase verliessen die Brennkammer 1 über Leitung 14. Der Umsatz des Phosphors war quantitativ.

**Patentansprüche**

1. Verfahren zur Herstellung von Phosphorpentoxid durch Verbrennen von elementarem Phosphor mit getrockneter Luft in einer Brennkammer aus Stahl unter Ausnutzung der Reaktionswärme zur Energiegewinnung, wobei die Wandung der Brennkammer zu einem Hohlräume aufweisenden Kühlsystem ausgebildet ist und in dem Kühlsystem eine als Wärmeträger zur Abführung der Reaktionswärme geeignete Flüssigkeit bzw. ein Flüssigkeits-Dampfgemisch unter Erwärmung auf erhöhte Temperaturen bei vorzugsweise erhöhtem Druck im Kreislauf geführt wird, und wobei man den im Kühlsystem entstandenen Dampf kontinuierlich abzieht, durch eine äquivalente Menge frischer Flüssigkeit ersetzt und die aus der Brennkammer entweichenden heissen $P_2O_5$-Dämpfe kondensiert oder zu Folgeprodukten weiterverarbeitet, dadurch gekennzeichnet, dass die Brennkammer ein zylindrischer Behälter mit einem Längenverhältnis von Höhe zu Durchmesser von 2,5:1 bis 5:1 ist, wobei in der kreisförmigen Bodenplatte 1 bis 10 Brenner axialsymmetrisch angeordnet sind.

2. Verfahren nach Anspruch 1, dadurch gekennzeichnet, dass in der Bodenplatte ein Brenner zentrisch angeordnet ist.

3. Verfahren nach Anspruch 1, dadurch gekennzeichnet, dass in der Bodenplatte 2 bis 10 Brenner auf konzentrischen Kreisen äquidistant angeordnet sind.

4. Verfahren nach einem der Ansprüche 1 bis 3, dadurch gekennzeichnet, dass man einen stöchiometrischen Luftüberschuss von 1 bis 40% einsetzt.

5. Verfahren nach einem der Ansprüche 1 bis 4, dadurch gekennzeichnet, dass man die Verbrennung bei Drücken von 0,8 bis 10 bar durchführt.

6. Verfahren nach einem der Ansprüche 1 bis 5, dadurch gekennzeichnet, dass der oder die Brenner mit je einer Einstoffdüse ausgerüstet sind, durch welche flüssiger Phosphor mit einem Druck von 5 bis 50 bar in die Brennkammer eintritt.

7. Verfahren nach einem der Ansprüche 1 bis 5, dadurch gekennzeichnet, dass der oder die Brenner mit je einer Zweistoffdüse für flüssigen Phosphor und Zerstäubungsluft ausgerüstet sind, wobei die Zerstäubungsluft mit einem Druck von 2 bis 6 bar in die Brennkammer eintritt.

8. Verfahren nach einem der Ansprüche 1 bis 7, dadurch gekennzeichnet, dass die Brennkammer mit einer Heizflächenbelastung von 50 bis 150 kW/m² betrieben wird.

9. Verfahren nach einem der Ansprüche 1 bis 8, dadurch gekennzeichnet, dass die Brennkammer mit einer Heizvolumenbelastung von 300 bis 600 kW/m³ betrieben wird.

10. Verfahren nach einem der Ansprüche 1 bis 9, dadurch gekennzeichnet, dass in dem Kühlsystem eine als Wärmeträger zur Abführung der Reaktionswärme geeignete Flüssigkeit bzw. ein Flüssigkeits-Dampfgemisch unter Erwärmung auf 100 bis 600° C bei Drücken von 1 bis 300 bar im Kreislauf geführt wird.

11. Verfahren nach einem der Ansprüche 1 bis 10, dadurch gekennzeichnet, dass die als Wärmeträger und zur Dampferzeugung geeignete Flüssigkeit Wasser mit einem Sauerstoffgehalt von 0,01 bis 0,1 mg/l und einem Chloridgehalt von 0,01 bis 0,5 mg/l ist.

12. Vorrichtung zur Durchführung des Verfahrens gemäss einem der Ansprüche 1 bis 11, bestehend aus einer Brennkammer aus Stahl, deren Wandung zu einem Hohlräume aufweisenden Kühlsystem ausgebildet ist, Zuleitungen für flüssigen Phosphor und Luft, einer Ableitung für Phosphorpentoxid am oberen Ende der Brennkammer, als Kühlkreislauf ausgestalteten Zu- und Ableitungen am Kühlsystem sowie einem in den Kühlkreislauf eingeschalteten Dampfabscheider mit einer Zuleitung für frische Kühlflüssigkeit und einer Ableitung für Dampf, dadurch gekennzeichnet, dass die Brennkammer ein zylindrischer Behälter mit einem Längenverhältnis von Höhe zu Durchmesser von 2,5:1 bis 5:1 ist, in dessen kreisförmiger Bodenplatte 1 bis 10 Brenner axialsymmetrisch angeordnet sind.

13. Vorrichtung nach Anspruch 12, gekennzeichnet durch einen zentrisch in die Bodenplatte eingelassenen Brenner.

14. Vorrichtung nach Anspruch 12, gekennzeichnet durch 2 bis 10 auf konzentrischen Kreisen äquidistant in die Bodenplatte eingelassene Brenner.

15. Vorrichtung nach einem der Ansprüche 12 bis 14, dadurch gekennzeichnet, dass die zu einem Kühlsystem ausgebildete Wandung der Brennkammer aus einer Rohrwand mit parallel aneinandergeschweissten Rohren, einer Flossenrohrwand oder einer Membranrohrwand besteht.

16. Vorrichtung nach Anspruch 15, dadurch gekennzeichnet, dass die Wandung der Brennkammer senkrecht angeordnet ist.

17. Vorrichtung nach einem der Ansprüche 12 bis 16, dadurch gekennzeichnet, dass die Brennkammer aus nichtrostendem Stahl, vorzugsweise nach DIN 17440, besteht.

## Claims

1. Process for making phosphorus pentoxide by subjecting elementary phosphorus to combustion with dried air in a steel-made combustion chamber with utilization of the reaction heat for the production for energy, wherein the combustion chamber has its walls arranged so as to form a cooling system with cavities therein, through which a liquid or liquid/vapor mixture being a suitable heat carrier for dissipating the reaction heat is circulated while heating it to elevated temperatures, preferably under increased pressure, and wherein vapor formed is continuously taken from the cooling system, replaced by an equivalent quantity of fresh liquid, and hot gaseous $P_2O_5$ coming from the combustion chamber is condensed or worked up into derivative products, characterized in that the combustion chamber is a cylindrical recipient presenting a heigt/diameter ratio of 2.5:1 to 5:1 and a circular base plate having 1 to 10 burners axisymmetrically disposed in it.

2. Process as claimed in claim 1, wherein a central burner is disposed in the base plate.

3. Process as claimed in claim 1, wherein 2 to 10 equidistant burners are disposed around concentric circles in the base plate.

4. Process as claimed in any of claims 1 to 3, wherein a 1 to 40% stoichiometric excess of air is used.

5. Process as claimed in any of claims 1 to 4, wherein the combustion is effected under a pressure of 0.8 to 10 bars.

6. Process as claimed in any of claims 1 to 5, wherein the burner (or each of the burners) is provided with a single medium nozzle admitting liquid phosphorus to the combustion chamber under a pressure of 5 to 50 bars.

7. Process as claimed in any of claims 1 to 5, wherein the burner (or each of the burners) is provided with a two medium nozzle admitting liquid phosphorus and atomizing air, respectively, the latter being admitted to the combustion chamber under a pressure of 2 to 6 bars.

8. Process as claimed in any of claims 1 to 7, wherein the combustion chamber is operated under a heating surface load of 50 to 150 kW/m².

9. Process as claimed in any of claims 1 to 8, wherein the combustion chamber is operated under a heating volume load of 300 to 600 kW/m³.

10. Process as claimed in any of claims 1 to 9, wherein liquid or liquid/vapor mixture being a suitable heat carrier for dissipating the reaction heat is circulated in the cooling system while heating it to 100 to 600° C under a pressure of 1 to 300 bars.

11. Process as claimed in any of claims 1 to 10, wherein the liquid being a suitable heat carrier and useful for the production of energy is water containing 0.01 to 0.1 mg/l oxygen and 0.01 to 0.5 mg/l chloride.

12. Apparatus for carrying out the process as claimed in any of claims 1 to 11, comprised of a steel-made combustion chamber having its walls arranged so as to form a cooling system with cavities therein and provided with inlets admitting liquid phosphorus and air, and, at the upper end of the combustion chamber, with a phosphorus pentoxide outlet, and also with inlets and outlets forming a cooling cycle in the cooling system, and provided, in the cooling cycle, with a steam separator fitted with a fresh cooling liquid inlet and a steam outlet, characterized in that the combustion chamber is a cylindrical recipient presenting a height/diameter ratio of 2.5:1 to 5:1 and a circular base plate having 1 to 10 burners axisymmetrically disposed in it.

13. Apparatus as claimed in claim 12, wherein a central burner is disposed in the base plate.

14. Apparatus as claimed in claim 12, wherein 2 to 10 equidistant burners are disposed around concentric circles in the base plate.

15. Apparatus as claimed in any of claims 12 to 14, wherein the walls of the combustion chamber arranged to form a cooling system are comprised of a wall of parallel tubes welded together, finned tubes or membrane tubes.

16. Apparatus as claimed in claim 15, wherein the walls of the combustion chamber are arranged vertically.

17. Apparatus as claimed in any of claims 12 to 16, wherein the combustion chamber is made of stainless steel, preferably steel complying with DIN-specification 17 440.

## Revendications

1. Procédé de préparation de l'anhydride phosphorique par combustion de phosphore élémentaire à l'aide d'air séché, avec utilisation de la chaleur de réaction pour la production d'énergie, dans une chambre de combustion en acier dont dont les parois sont conçues de manière à former un système réfrigérant comportant des vides, dans lequel on fait circuler en le réchauffant à des températures élevées, de préférence sous pression élevée, un liquide ou un mélange vapeur/liquide convenant comme caloporteur pour la dissipation de la chaleur de réaction, on retire en continu du système réfrigérant la vapeur formée et on la remplace par une quantité équivalente de liquide frais et on condense ou on transforme en dérivés l'anhydride phosphorique gazeux chaud sortant de la chambre de combustion, caractérisé en ce que la chambre de combustion est un récipient cylindrique présentant un rapport hauteur/diamètre de 2,5:1 à 5:1 et une plaque de fond circulaire comportant 1-10 brûleurs axisymétriques.

2. Procédé selon la revendication 1, caractérisé en ce qu'un brûleur est disposé centralement dans la plaque de fond.

3. Procédé selon la revendication 1, caractérisé en ce que 2-10 brûleurs équidistants sont disposés sur des cercles concentriques dans la plaque de fond.

4. Procédé selon l'une des revendications 1 à 3, caractérisé en ce que l'on utilise l'air dans un excès stœchiométrique de 1-40%.

5. Procédé selon l'une des revendications 1 à 4, caractérisé en ce que l'on effectue la combustion sous des pressions de 0,8-10 bars.

6. Procédé selon l'une des revendications 1 à 5, caractérisé en ce que le (ou les) brûleur(s) est (sont) muni(s chacun) d'une buse à une seule substance par laquelle le phosphore pénètre dans la chambre de combustion sous une pression de 5-50 bars.

7. Procédé selon l'une des revendications 1 à 5, caractérisé en ce que le (ou les) brûleur(s) est (sont) muni(s chacun) d'une buse à deux substances pour le phosphore liquide et l'air d'atomisation, ce dernier pénétrant dans la chambre de combustion sous une pression de 2-6 bars.

8. Procédé selon l'une des revendications 1 à 7, caractérisé en ce que l'on fait fonctionner la chambre de combustion sous une charge de la surface chauffante de 50-150 kW/m².

9. Procédé selon l'une des revendications 1 à 8, caractérisé en ce que l'on fait fonctionner la chambre de combustion sous une charge du volume chauffant de 300-600 kW/m³.

10. Procédé selon l'une des revendications 1 à 9, caractérisé en ce que l'on fait circuler dans le système réfrigérant un liquide ou un mélange vapeur/liquide convenant comme caloporteur pour la dissipation de la chaleur de réaction en le réchauffant à 100-600° C sous des pressions de 1-300 bars.

11. Procédé selon l'une des revendications 1 à 10, caractérisé en ce que le liquide convenant comme caloporteur et pour la production de vapeur est de l'eau ayant une teneur en oxygène de 0,01-0,1 mg/l et une teneur en chlorures de 0,01-0,5 mg/l.

12. Appareillage pour la mise en œuvre du procédé selon l'une des revendications 1 à 11, comportant une chambre de combustion en acier, dont les parois sont conçues de manière à former un système réfrigérant comportant des vides, des tubes d'amenée de phosphore liquide et d'air, un tube de sortie d'anhydride phosphorique à l'extrémité supérieure de la chambre de combustion, des tubes d'amenée et de sortie agencés de manière à former un circuit réfrigérant dans le système réfrigérant ainsi qu'un séparateur de vapeur agencé dans le circuit réfrigérant et muni d'un tube d'amenée de liquide réfrigérant frais et d'un tube de sortie de vapeur, caractérisé en ce que la chambre de combustion est un récipient cylindrique présentant un rapport hauteur/diamètre de 2,5:1 à 5:1 et une plaque de fond circulaire comportant 1-10 brûleurs axisymétriques.

13. Appareillage selon la revendication 12, caractérisé en ce qu'un brûleur central est disposé dans la plaque de fond.

14. Appareillage selon la revendication 12, caractérisé en ce que 2-10 brûleurs équidistants sont disposés sur des cercles concentriques dans la plaque de fond.

15. Appareillage selon l'une des revendications 12 à 14, caractérisé en ce que les parois de la chambre de combustion conçues de manière à former un système réfrigérant sont constituées par une paroi de tubes soudés parallèlement entre eux, une paroi de tubes pinniformes ou une paroi de tubes à membrane.

16. Appareillage selon la revendication 15, caractérisé en ce que les parois de la chambre de combustion sont disposées verticalement.

17. Appareillage selon l'une des revendications 12 à 16, caractérisé en ce que la chambre de combustion est en acier inoxydable, de préférence selon la norme allemande DIN 17 440.

FIG.1

FIG. 2

15

FIG.3